(19) **Europäisches Patentamt European Patent Office Office européen des brevets**

(11) **EP 3 926 620 B1**

(12) **EUROPEAN PATENT SPECIFICATION**

(45) Date of publication and mention
of the grant of the patent:
**01.10.2025 Bulletin 2025/40**

(21) Application number: **20180308.7**

(22) Date of filing: **16.06.2020**

(51) International Patent Classification (IPC):
***G10K 11/16*** (2006.01)   ***B60R 13/08*** (2006.01)

(52) Cooperative Patent Classification (CPC):
**G10K 11/16; B60R 13/0815; B60R 13/083**

(54) **AUTOMOTIVE TRIM PART WITH VIBRATION DAMPING PROPERTIES**

KRAFTFAHRZEUGVERKLEIDUNGSTEIL MIT SCHWINGUNGSDÄMPFENDEN EIGENSCHAFTEN

PIÈCE DE GARNITURE D'AUTOMOBILE AYANT DES PROPRIÉTÉS D'ABSORPTION DE VIBRATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.12.2021 Bulletin 2021/51**

(73) Proprietor: **Autoneum Management AG 8406 Winterthur (CH)**

(72) Inventors:
• **SANCHEZ CLIMENT, Francisco 8050 Zürich (CH)**
• **GODANO, Philippe 8400 Winterhur (CH)**
• **COURTOIS, Théophane 8006 Zürich (CH)**
• **HORAK, Jan 8408 Winterthur (CH)**
• **CAPRIOLI, Davide 8400 Winterthur (CH)**

(56) References cited:
**EP-A1- 1 557 819      EP-A1- 3 570 274
WO-A1-2019/079695   US-A1- 2005 194 210
US-A1- 2011 056 763   US-A1- 2015 034 414
US-B1- 9 630 576**

## Description

Technical Field

The present invention is directed to an automotive trim part for noise attenuation in passenger vehicles, in particular a trim part or cladding in contact with a vibrating surface, such as a flooring system, an inner dash, an outer dash, a battery lid insulator, a vehicle including such a trim part as well as a method of producing such a trim part.

Background Art

The sources of noise in a vehicle are many and include, among others, powertrain, driveline, tires (excited by the road surface), brakes, and wind. The noise generated by powertrain and tires, in particular, may cover a rather large frequency range that, for normal diesel and petrol vehicles as well as for vehicles equipped with an electric drive unit, can go from 100Hz up to 10kHz.

Generally, low frequency noise can be considered to cover the frequency range from 100Hz to 600Hz. It is dominated by so-called 'structure-borne' noise: vibration is transmitted by a source (e.g. the powertrain or the tires) to the panels surrounding the passenger compartment via a variety of structural paths and such panels then radiate noise into the passenger compartment itself. While on the other hand, generally mid-high frequency noise can be considered to cover the frequency range between 600Hz and 10kHz. It is dominated by 'airborne-noise': in this case the vibration is transmitted by a source (e.g. the powertrain or the tires) to the panels surrounding the passenger compartment via sound waves and such panels then radiate noise into the passenger compartment itself. For passenger comfort, it is necessary, that a sufficiently low interior noise level is obtained both at low and at mid-high frequencies.

For the attenuation of airborne mid-high frequency noise in vehicles, the use of noise attenuating trim parts, such as inner dash systems or floor carpet systems is known.

Generally, noise attenuating trim parts can effectively reduce mid-high frequency airborne noise thanks to their acoustic insulation and/or absorption properties. Acoustic insulation refers to the capability of a part to reflect the acoustic energy radiated by a source and impinging on it, while acoustic absorption refers to the capability of a part to dissipate the acoustic energy radiated by a source and impinging on it.

The acoustic insulation and absorption properties of a noise attenuating trim part generally derive from the materials comprised in it and from their arrangement in the part itself. In particular, to obtain good mid-high frequency insulation and/or absorption properties, the part may advantageously comprise a material layer consisting of a low-density porous material and arranged on the side of the part facing the vehicle body. This layer is placed in contact with the vehicle body, when the part is installed in the vehicle. This layer may consist of a low-density fibrous material or foam. Additional layers may be needed to obtain the desired noise attenuation in the mid-high frequency range. However, noise attenuating trim parts belonging to the state of the art are generally unable to effectively attenuate low-frequency structure-borne noise.

For this reason, traditionally, damping pads comprising polymeric viscoelastic materials (for example bitumen-based materials) are used for the attenuation of low-frequency structure-borne noise. These damping pads are laminated onto the vehicle body. They are generally very effective in reducing low-frequency structure-borne noise, thanks to their vibration damping properties.

Vibration damping refers to the capability of a part to reduce the vibrations of the structure on which it is applied (e.g. the body-in-white forming the vehicle body).

However, viscoelastic damping pads are very poor in attenuating noise in the range of mid and high frequencies.

Therefore, in the state of the art in order to achieve a satisfactory noise attenuation over the full frequency range there is generally the need to combine two different types of parts, namely noise attenuating trim parts for the mid-high frequencies and vibration damping pads for the low frequencies.

This adds complexity and cost to the vehicle assembly process. In particular, damping pads, in order to damp the vibrations of the vehicle body, must be laminated onto it, i.e. they must adhere very strongly to the vehicle body. For this reason, damping pads are generally first manually positioned on the vehicle body along the vehicle assembly line, then cured and laminated to the body under heat. Alternatively, damping material may be directly sprayed onto the vehicle body in pre-defined areas. Both these processes are complicated, time consuming and require important investments, thus increasing the complexity of the vehicle assembly process and the production cost of the vehicle. Furthermore they slow down the assembly process of the vehicle. On the other hand, noise attenuating trim parts may be installed in a vehicle in an easy way, simply by lying them onto the vehicle body along the assembly line.

In addition, the materials generally used for the production of vibration damping pads may pose performance problems in relation to their use in the automotive industry. In order to reduce the vehicle body vibrations, damping pads (or sprayed-on damping materials) used in the automotive field generally rely on the viscoelastic properties of the materials they comprise (e.g. bitumen-based materials), that may be very sensitive to temperature. As a consequence, damping pads may perform well only over a narrow temperature range. The temperature of a vehicle body may however vary over a very wide range, from below -30 degrees Celsius to above +80 degrees Celsius. Furthermore, traditional damping materials such as bitumen based materials tend to age and get brittle and lose damping performance during the vehicle lifetime.

US 2005/194210 A1 describes a noise reduction apparatus comprising a porous structure containing loose particles, a front layer and a rear layer.

US 9,630,576 B1 describes a trim panel for a vehicle, comprising a container having a contact surface with a part of the vehicle, the container being filled with a gas free to move in response to the movements of the contact surface.

WO 2019/079695 A1 describes an acoustic damping panel wherein cavities are formed in a porous layer, the cavities being filled with loose particles and closed by a film layer.

It is the object of the present invention to eliminate the need for damping pads or sprayed-on damping materials, by providing an alternative noise attenuating trim part that can attenuate sound over the full temperature and frequency range necessary, thus encompassing all the acoustic needs for the reduction of noise in the passenger cabin of a car, that is easy to install on the vehicle and that keeps its performance during the vehicle lifetime.

Summary of invention

The object of the invention is achieved by an automotive noise attenuating trim part according to claim 1, a method of producing such a trim part according to claim 15 and the use of such a trim part according to claim **16.**

In particular by an automotive noise attenuating trim part comprising at least a porous layer and a plurality of closed containers, whereby each closed container is partly filled with loose particles that can freely move inside the volume of the container, whereby each closed container comprises a contact surface formed by a film configured to contact a vibrating surface of the vehicle and whereby the surface of the film opposite the contact surface is in contact with at least part of the loose particles, such that the film is configured to transfer vibrational energy from the vibrating surface to the loose particles inside the container, wherein the porous layer has a section of its outer surface configured to contact said vehicle vibrating surface and presenting a plurality of recesses with a shape that conforms to the shape of the plurality of closed containers and wherein each closed container is integrated in one of the plurality of recesses in such a way that the contact surface of the film is flush with said section of the outer surface of the porous layer.

Surprisingly, a container with a contact surface formed by a film is able to damp the vehicle body vibration over an area larger than the actual area contacted, thereby very effectively reducing low frequency noise, while the porous layer and eventually additional layers still provides the mid-high frequency noise reduction. For the first time one single trim part is able to attenuate noise over the full frequency range relevant for the acoustic comfort in the passenger cabin of a vehicle.

The contact surface formed by a film is defined as the outer surface of the film that is the contact surface with the vibrating panel of the vehicle, the opposite surface of the film is in contact at least partly with the loose particles inside the container, so vibrational energy of the vehicle panel can be transferred to the loose particles inside the container, where it is dissipated by the movement of the particles.

Preferably the container is formed by a vessel part for maintaining a defined void volume and a closure part for closing the vessel after the vessel is filled with particles. The closure needs to be connected to the vessel in such a ways that together they form a closed container preventing the particles from leaking out during use. Preferably the closure comprises the contact surface formed by a film, more preferably the closure might consist of a film.

Preferably the closed container with the contact surface formed by a film is integrated within the porous layer in such a way that the contact surface of the film can face and is in contact with a vibrating surface of the vehicle, and the surface of the film opposite of the contact surface is in contact with at least a part of the loose particles inside the container.

The film forming the contact surface is at least flush with a surface of the porous layer. Hence also the porous layer has at least part of its surface in contact with the vibrating surface of the vehicle. Preferably during use the film in the at least the area of the contact surface is able to slightly deform in such a ways to obtain a good contact even if the vehicle panel surface is uneven or not flat, when the part is placed on top of the vehicle panel in the car. This might be achieved by the choice of the film material used.

Surprisingly, as the size of the contact surface of the container or containers is very small in comparison to the full surface of the trim part in contact with the vibrating surface of the vehicle, preferably less than 5% of the total surface that might be in contact with the vibrating surface of the vehicle, the noise absorbing and/or insulating function of the trim part is still given and not substantially impacted. Furthermore as already a measureable damping effect can be achieved with small containers with particle filling of less than 100 gr each, the overall weight of the part is not substantially increased.

In addition the integration of the containers inside the porous layers enables and maintains a precise and stable placing of the containers inside the car without the need for additional process steps in the car assembly line and without the need for an additional glue or adhesive layer. Furthermore the local gravity load of the part on the container enables a good surface contact between the container contact surface and the vibrating surface of the vehicle. On the other hand, the overall weight of the part is not decisive for the container vibration damping effectiveness.

A plurality of closed containers partly filled with loose particles is placed within the porous layer. Preferably the closed container comprises a vessel part and a closure part connected together to form a closed container with a defined void volume, which is partly filled with loose particles.

The closed container further comprises a contact surface for contacting a vibrating surface of the vehicle formed by a film, such that it can transfer vibrational energy from the vibrating surface of the vehicle to the loose particles inside the container.

The closed container including the particles should be oriented within the part in such a way that the particles, under their gravity load, are at least in part in contact with the surface of the film opposite the contact surface. When the part is in use, at least the film is in contact on one side with a vibrating surface of the vehicle via the contact surface and on the other side with at least a part of the loose particles inside the container. When the part is in use, the contact surface can thus take up the vibration of a vibrating surface of the vehicle, for instance a body panel of the body in white or the top of the battery box, the film transfers it to the opposing site where it is transferred to the particles which can freely move and thereby dissipate the energy by friction and/or inelastic collisions.

Although the film can be placed either in the vessel part or the closure part, it is preferably placed in the closure part. In a further preferred embodiment the closure is made of a film.

The closed container filled only partially with loose particles according to the invention, enables the ability of the particles to move freely inside the volume of the container.

The remaining volume of the container not occupied by the particles may be filled with a fluid such to enable the free movement of the particles so they can dissipate energy. Preferably the remaining volume is filled with air or a suitable gas.

The closed container needs to be able to withstand mechanical loads during use like for instance the pressure due to stepping of passengers on a flooring part or the pressure due to temperature effects impacting the volume of the filling fluid, in particular if gas or air is used to fill the container. Hence the vessel is preferably able to withstand some deformation during use. However the container must be able to maintain the initial volume and/or shape substantially.

The film, at least at the contact surface should be able to maintain the contact to the vibrating surface at all times. Surprisingly by using a film this can be achieved without the need for an adhesive layer or any type of mechanical bonding. The film should also be able to effectively transfer the vibration energy to the particles contacting the film within the container.

The transfer of vibrational energy from the vehicle body to the loose particles in the container takes place through the contact surface formed by a film. The efficiency of the vibrational energy transfer may depend on the material the film is made of, its thickness and its mechanical properties.

In addition the film must be able to withstand stresses during production and use and it should not tear.

The thickness of the film is preferably between $10\mu m$ and $1mm$, preferably between $40\mu m$ and $700\mu m$, most preferably between $60\mu m$ and $300\mu m$.

The thickness can change depending on the material chosen for the film.

The properties of the film might change during production of the closed container, for instance by stretching it during a lamination process.

Preferably the film has a tensile modulus lower than 1GPa, preferably lower than 500 MPa, preferably lower than 250 MPa. In case the film is anisotropic, these values refer both to machine-direction and to cross-direction.

The smaller the thickness and/or the tensile modulus of the film, the more the film deforms and adapts to the shape of the vehicle body. On the other hand, the thicker is the film and or the higher is its tensile modulus, the more robust the film becomes from the mechanical standpoint and the easier the production process becomes.

Preferably the film has a tensile strength at break higher than 20MPa and a strain at break higher than 100%. In case the film is anisotropic, these values refer both to machine-direction and cross-direction.

Stress and strain at break are measured according to the current version of ISO 527-1 and 527-3.

The tensile modulus of the film is measured as follows. A number of test specimens are prepared, following the indications given in the current version of ISO 527-1 and ISO 527-3 standards. For each test specimen, the stress-strain curve is measured, according to the current version of ISO 527-1. The tensile modulus of each test specimen is evaluated from the corresponding stress-strain curve as the secant modulus between 0% strain and 2% strain, i.e.

$$E_t = \frac{\sigma_2 - \sigma_1}{\epsilon_2 - \epsilon_1}$$

where Et is the tensile modulus of the test specimen, expressed in Mega Pascal (MPa), $\sigma_1$ is the stress in MPa measured at the strain value $\epsilon_1$=0 (0%) and $\sigma_2$ is the stress in MPa measured at the strain value $\epsilon_2$=0.02 (2%). The tensile modulus of the film is obtained from the tensile moduli of the single test specimens following the procedures detailed in the current version of ISO 527-1.

Preferably the film comprises at least one of the polymers or copolymers selected from the group consisting of polyester such as polyethylene terephthalate (PET) or polybutylene terephthalate (PBT), polyamide such as polyamide 6 or polyamide 66, polyolefin such as a polyethylene (PE), polypropylene (PP), low density polyethylene (LDPE), linear low density polyethylene (LLDPE) or high density polyethylene (HDPE), or ethylene acrylic acid copolymers (EAA), thermoplastic elastomers (TPEs) such as thermoplastic polyolefin (TPO), thermoplastic polyurethane (TPU), polyetherimide, polysulfone, polyethersulfone, polyetheretherketone (PEEK), ethylene vinyl acetate (EVA), or biopolymers, such as polylactic acid or ionomer polymers.

Preferably a thermoplastic material is used, preferably polyester or a polyolefin. Preferably the material for the film, the vessel and/or the container as a whole is made of the same group of materials as the porous layer, making recycling easier.

Also a bi- or multilayer film might be used, to further increase stability, elasticity and or robustness.

The film may be directly laminated to the rim of the vessel to close the container after filling it with loose particles. In particular if the film is directly laminated to the vessel bi- or multilayer films are preferred whereby one layer may be chosen for a good closure of the vessel while the other layer or layers are responsible for a good lamination, melting together with or against the rim of the vessel, forming a closed seal.

Alternatively a glue or adhesive layer might be used to connect the vessel and the closure to obtain a closed container.

Preferably, the portion of the film that is in contact with the vehicle body when the part is in use is not bonded (e.g. glued) to the vehicle body itself.

Quite surprisingly, when a film according to the invention is used to transmit the body vibrations to the loose particles inside the container, there is no need to bond it to the body in order to get the vibration energy efficiently transferred to the particles. Thanks to the high flexibility of the film, the damping effect is the same -or at least not significantly different-compared to the one that would be obtained when the film is bonded, e.g. glued, to the vehicle body when in use. Bonding the film to the body when placing the trim part into the vehicle would make the trim part installation process longer and less robust; having a solution where no bonding is required is very convenient, makes the installation process straightforward, it reduces the vehicle assembly time and cost.

Alternatively a bonding solution with a non-permanent adhesive might be used or a pressure sensitive bonding solution that upon use would increase the bonding between contact surface and vehicle body. This might have an advantage on sloping surfaces of the vehicle.

As the particles used are very small at least $20\mu m$ minimal size, they might creep between laminated seams or into microscopic puncture of the film layer leaking out of the container and impairing its function over time. In order to avoid that the particles leak out of the container, the container material including the film should be impervious. Whereby impervious means that no particles can pass through a flawless film. Preferably at least for the film bi-or multilayer films are used.

The loose particles

In the noise attenuating trim part according to the invention, a vibration damping effect at low frequencies, i.e. between 100Hz and 600Hz, is achieved thanks to the fact that the vibrational energy of the vehicle body is transmitted to the loose particles inside the container, which dissipate it, through friction and/or inelastic collisions.

The frequency range over which the loose particles in the container are most effective in dissipating vibrational energy by friction and inelastic collisions can be tuned by suitably choosing the statistical distribution of their particle size.

The 'particle size' when referred to an individual particle, is defined as its area equivalent circular diameter, measured according to the current ISO 13322-2.

The particles in one container may have different particle sizes. From the particle size of the individual particles measured according to the current ISO 13322-2, the statistical distribution of the particle size of the particles in a container may be deduced, for example following the indications of the current version of ISO 9672-2.

In what follows, the term 'particle size', when referred to the ensemble of the particles inside the container, shall be understood as referring to the median $D_{50}$ of the statistical distribution of the particle size of the particles in the container.

Furthermore, the term "particle size distribution span" or "distribution span", when referred to the ensemble of the particles inside the container, shall be understood as referring to the quantity S calculated from the formula $S = (D_{90} - D_{10})/D_{50}$, where $D_{10}$ is the $10^{th}$-percentile-size and $D_{90}$ is the $90^{th}$-percentile size calculated from the particle size statistical distribution. The particle size distribution span is a measure of how dispersed the particle size statistical distribution is around the median $D_{50}$.

Preferably the particles in the container have a median particle size between $20\mu m$ and $1250\mu m$, preferably between $250\mu m$ and $1000\mu m$, preferably between $350\mu m$ and $700\mu m$.

Preferably, the particles in the container have a particle size distribution span lower than or equal to 2.5, preferably lower than or equal to 1.5, preferably lower than or equal to 1.

Particles with a larger size are more effective in dissipating energy by friction and inelastic collisions at lower frequencies, i.e. frequencies closer to 100Hz, and less effective at higher frequencies, i.e. frequencies closer to 600Hz, whereby the overall frequencies to be dampened are within the range of 100Hz to 600Hz.

On the other hand, particles with a smaller particle size are more effective in dissipating energy by friction and inelastic collisions at higher frequencies, i.e.

frequencies closer to 600Hz, and less effective at lower frequencies, i.e. frequencies closer to 100Hz, whereby the overall frequencies to be dampened are within the range of 100Hz to 600Hz. Furthermore, the energy dissipation is more broadband for particles with a smaller particle size than for particles with a larger particle size.

By choosing the median and the span of the particle size distribution of the particles in the container, it is then possible to adjust the position and the width of the frequency range over which they result most effective in dissipating energy by friction and inelastic collisions. This will be the frequency range over which the container according to the invention will result most effective in damping the vibrations of the body.

If a high vibration damping effect is desired at lower frequencies, a larger median particle size will have to be chosen, e.g. above $350\mu m$. On the other hand, if a high vibration damping effect is desired at higher frequencies, a smaller median particle size will have to be chosen, e.g. below $350\mu m$.

The distribution span will have to be chosen on the basis of the width of the frequency range over which the vibration damping effect is desired. For a fixed amount of particles, increasing the span will lead to a more broadband but less pronounced effect.

The trim part comprises more than one container. By using different particle size distributions for different containers it might be possible to optimise the overall damping performance of the part.

In a vehicle panel, for example a floor panel, the frequency content of the vibration of different areas may be different. Some areas may vibrate predominantly at lower frequencies, e.g. below 250Hz, and some other areas may vibrate predominantly at higher frequencies, e.g. above 250Hz. For some areas, the vibration may be more broadband, for some other areas it may be more concentrated on a restricted frequency range.

Surprisingly, by choosing the particle size distribution of the particles included in the containers, the trim part according to the invention may be adapted to effectively damp the vibration of the various areas of a vehicle body panel, even when their frequency content is different. This can be obtained by choosing the median and the span of the particle size distribution of the particles in each container in such a way that they adapt to the frequency content of the vibration of the vehicle body in the region where the container is positioned.

To damp the vibration in areas vibrating predominantly at lower frequencies, a particle size distribution with a larger median will be chosen, e.g. above $350\mu m$. For areas vibrating predominantly at higher frequencies, a particle size distribution with a smaller median will have to be chosen, e.g. below $350\mu m$. Similarly, for areas with a more broadband vibration a particle size distribution with a larger span may be chosen and for areas with a less broadband vibration a particle size distribution with a smaller span may be chosen. This is an advantage over a traditional damping pad, for which no tuning for the different areas of a body panel is possible.

Preferably the total weight of the particles in one container is between 5 and 100 grams, preferably between 8 and 60 grams, preferably between 10 and 50 grams.

Surprisingly, already with these low weights an effective reduction of the low-frequency structure-borne vibrations of the vehicle body can be achieved.

The 'filling ratio' of the container represents the ratio between the volume occupied by the particles contained in it and the total internal volume of the container.

A fine-tuning of the frequency range over which the loose particles in the container are most effective in dissipating vibrational energy by friction and inelastic collisions may be obtained by choosing the filling ratio. A lower filling ratio increases the performance at lower frequencies, i.e. frequencies closer to 100Hz while a higher filling ratio increases the performance at higher frequencies, i.e. frequencies closer to 600Hz, whereby the overall frequencies to be dampened are within the range from 100Hz to 600Hz

Preferably, the container comprised in the noise attenuating trim part according to the invention presents a filling ratio between 30% and 90%, more preferably between 40% and 70%. Filling ratios higher than 90% are not preferable, since the particles would have only little space inside the container to move freely.

The particles are a loose granular substance and preferably they are made of at least one of the materials selected from the group consisting of inert minerals, such as calcium carbonate or silicon dioxide, metals, such as steel, ceramic materials, elastomeric materials and polymeric materials such as polystyrene. Particles made with different materials may be used in a single container.

Surprisingly also particles made with elastomeric materials, either from synthetic sources such as styrene-butadiene rubber, nitrile rubber, rubber from ethylene propylene diene monomer (EPDM) and butyl rubber or natural rubber or compounds made from a combination of these might be used and obtain a good damping results. Compounds can be both cross-linked by typical means such as vulcanization or radical cross-linking and non-cross-linked.

The material used might be virgin or of a reclaimed or recycled source. For instance small grained particles originating from reclaimed tires are a good filler material for the loose particles according to the invention. In case elastomeric materials are used an intermediate particle size of, for example between $200\mu m$ and $800\mu m$ might be used.

The final choice of material for the loose particles is depending on the frequency range to be attenuated and the preferred corresponding particle size distribution as well as on price and availability.

The performance of the trim part according to the invention can be optimized and fine-tuned by properly choosing the particle size distribution of the loose particles inside the container, the material they are made with, their total weight and the relative filling ratio and by exploiting the inter-relations existing among all these parameters. The materials given are such that the damping performance of the part is not substantially impacted by temperature changes during use in a vehicle, contrary to the damping pads of the state of the art. This is a huge advantage as the need to adapt the material properties for a local market depending on the outdoor temperatures in that market falls away.

The container comprises a vessel part and a cover part. The vessel part is defining and maintaining a defined internal volume during production and use of the trim part. The defined internal volume of the container should be large enough not only to encompass the particles but also to allow the particles to move freely inside the container when exposed to vibrations.

Preferably, the internal volume of the container comprised in the noise attenuating trim part according to the invention is between $2cm^3$ and $100cm^3$, preferably between $5cm^3$ and $50cm^3$, preferably between $10cm^3$ and $30cm^3$. With a particle filling of not more than 90% of the total internal volume.

The vessel is preferably much stiffer than the film, in such a way to guarantee dimensional stability and structural robustness to the container.

Preferably, the vessel is made of a thermoplastic material having a Young's modulus between 0.7GPa and 4GPa, preferably between 1.0GPa and 3GPa.

Preferably the walls of the vessel have a thickness of between 1.5mm and 5mm, preferably between 2.5mm and 4mm.

The actual thickness of the walls of the vessel may be depending on the production process of the vessel, for instance injection moulding, blow moulding, hot moulding or an additive manufacturing technology like 3D printing, and the thickness may vary throughout the vessel walls, for instance by blow moulding or hot moulding, thinner areas and thicker areas might be present within the vessel walls.

Preferably the vessel comprises at least one of the polymers or copolymers selected from the group consisting of polyester such as polyethylene terephthalate (PET) or polybutylene terephthalate (PBT), polyamide such as polyamide 6 or polyamide 66, polyolefin such as a polyethylene (PE), polypropylene (PP), low density polyethylene (LDPE),linear low density polyethylene (LLDPE) or high density polyethylene (HDPE), ionomers such ethylene acrylic acid copolymers (EAA), thermoplastic elastomers (TPEs) such as thermoplastic polyolefin (TPO), thermoplastic polyurethane (TPU), polycarbonates (PC), polyimides such as polyetherimide (PEI) or polyetheretherketone (PEEK), polysulfone, polyethersulfone, ethylene vinyl acetate (EVA) or biopolymers such as polylactic acid (PLA). Also combination of such materials might be used.

Preferably the vessel is made of at least one layer comprising one of the materials listed, however also multilayer materials might be used to obtain the vessel according to the invention.

Preferably, the vessel further comprises reinforcing fibers for instance glass fibers or polycarbonate fibers to further enhance the stiffness and robustness of the container.

The shape of the vessel can be adapted to enable an easy insertion in the porous layer, while it can be further designed to include means for maintaining the container in the trim part during transport and or handling of the trim part, for instance during the installation of the trim part inside the vehicle. For instance these means might be achieved by an adaptation of the basic shape of the vessel part. For example a shape that is slightly smaller in cross section at the contacting surface and that gets larger towards the bottom of the vessel, might prevent the container from falling out during handling, slightly tapered or curved sides might be preferred. In addition other means like ribs, small embossments or screw type grooves might secure the vessel at its place.

Alternatively or in combination with an optimised shape the vessel and or the cover might form a flange that prevents the vessel from sinking too deep within the porous layer. For the container according to the invention to dissipate vibrational energy, it must be guaranteed that the contact surface is able to and maintain contact with the vibrating surface of the vehicle. Hence the container should not sink into the porous layer and the contact surface should be at least substantially flush with the surface of the porous layer comprising it. Small local deviations in the surface may be overcome by a local deformation of the contact surface formed by the film, this might go both ways -both inwards and outwards- in relation to the plane of the surface,

For this purpose the vessel can be fitted with a flange that is preferably in contact with the surface of the porous layer adjacent to the vessel and that avoids the above-mentioned sinking. A flange area in addition may further enhance the contact surface between the cover and the vessel, producing a larger area for lamination and sealing, which is very convenient for an easier production of the container.

For example the container might be shaped like a parallelepiped or cylinder. In another embodiment, the container might be shaped like a half-sphere, in which case the flat face of the half-sphere consists of the closure comprising the film. A half sphere has the advantage that any pressure on the container from above the half sphere will be distributed evenly preventing a cracking or bursting of the container during use.

Parallelepiped, half-sphere and/or cylindrical shape are very simple shapes that can be easily produced and that can favour an easy integration of the container into the trim part.

In another embodiment, the container is shaped like an inverted truncated cone, being the minor base of the cone consisting of the closure comprising the film. In this embodiment, when the container is embedded into the trim part, its shape may help preventing it from falling out of the trim part itself. This can make the production of the part easier, faster and thus less expensive.

This effect can be obtained also with other container shapes, like an inverted truncated pyramid or a barrel-like shape or also other shapes, which will result obvious to the man skilled in the art.

Preferably, the vessel has an edge along which the film can be bonded, e.g. by gluing or thermo-bonding. Preferably, the edge of the vessel is a fitted with a protruding flange having a width of at least 1mm. The flange may enlarge the bonding surface for the film. It may also help preventing that the container sinks into the porous layer when it is embedded into it.

Preferably, the height of the container is at least 5mm lower than the thickness of the porous layer, to ensure the presence of at least 5mm of porous material above the container. Quite surprisingly, when this condition is satisfied, the presence of the container does not substantially impact the high-frequency air-borne noise performance of the trim part.

The noise attenuating trim part according to the invention comprises several containers. The number of containers is defined on the basis of the desired damping performance and on the basis of weight, space and cost constraints. Increasing the number of containers leads to a higher performance but also to a higher weight, cost and production process complexity.

Preferably, the porous layer in the noise attenuating trim part according to the invention may include up to 30 containers, preferably between 4 and 30 containers, more preferably between 8 and 20 containers.

Surprisingly, since the containers have not more than 100 gr of filling each, overall a much lower weight is needed to obtain a satisfactory damping effect in comparison to the state of the art dampers used to dampen the same surface, thus reducing the weight of a car and hence the car energy consumption.

By integrating the containers in the trim part, their positions can be pre-defined and during installation of the trim part the correct positions of the containers are ensured. The containers are preferably placed where the body vibrates the most, at so-called 'vibration hot-spots'. Such vibration hot-spots can be identified with experimental and/or simulation techniques well-known in the art. On a body panel there may be several vibration hot-spots and they may concern different frequency ranges. Hence, the use of containers partly filled with different types of loose particles with in the same part, may be preferred.

The noise attenuating trim part according to the invention is preferably installed on a predominantly horizontal vehicle body panel (e.g. a vehicle floor), but it may work also when installed on body panels with other orientations (e.g. a vehicle dash panel), provided that when the part is installed on the vehicle, the loose particles inside the container are, under their gravity load, at least partially in contact with the film in the region where the film is contacting the vibrating surface of the vehicle body.

The containers embedded in the noise attenuating trim part according to the invention may all have the same characteristics in terms of size, shape, particles type and filling ratio or they may be different, in order to adapt to the vibration of the body panels the part is in contact with as well as to the shape of the vehicle body and or the trim part, when it is installed in the vehicle.

In the trim part according to the invention, the containers partly filled with loose particles are embedded into a porous layer. Preferably, this porous layer consists of an open cell foam and/or a fibrous material.

The porous layer may be formed from any type of open cell foam, preferably the porous layer is made of polyurethane foam. Preferably the foam has a density between 25kg/m$^3$ and 120 Kg/m$^3$, preferably between 35kg/m$^3$ and 80 Kg/m$^3$, preferably between 45kg/m$^3$ and 70 kg/m$^3$.

The porous layer may be a fibrous layer comprising fibers, such as staple fibers, and/or filaments and a thermoplastic binder material.

Any combination of reclaimed, recycled and or virgin fibers, manmade, inorganic and or natural fibers may be used.

For instance the porous layer may comprise reclaimed fibers made of at least one material selected from the group consisting of cotton shoddy, synthetic shoddy, polyester shoddy, natural fibre shoddy and mixed synthetic fibre and natural fibre shoddy.

The shoddy type is defined by having at least 51% by weight of the referenced material included, 49% can be fibers from other sources. So for instance, shoddy polyester contains at least 51% by weight of polyester based fibres. Alternatively, the shoddy material can be a mixture of different synthetic and natural fibers, whereby not one type is prevailing.

Preferably the fibers or filaments are made of at least one material selected from the group consisting of polyamide (nylon) such as polyamide 6 or polyamide 66, polyester such as copolymers of polyester or polyethylene terephthalate (PET) or polybutylene terephthalate (PBT) or polytrimethylene terephthalate (PTT), polyolefin such as polypropylene or polyethylene such as copolymer of polyethylene and mineral fibers, preferably one of glass fibers or recycled glass fibers or basalt fibers or carbon fibers.

Preferably the porous layer comprises self-crimped fibers, preferably hollow self-crimped fibers.

The porous layer may comprise a thermoset binder, for instance a binder based on phenolic resin or epoxy resin, or a thermoplastic binder consisting of at least one of the materials selected from the group consisting of polyester such as polyethylene terephthalate (PET), copolymers of polyester, polyolefin such as polypropylene or polyethylene, polylactic acid (PLA) and polyamide such as polyamide 6 or polyamide 66.

Preferably the binder material is in the form of fibers, flakes or powder. More preferably the binder material is one of a mono-component fibre or bi-component fibre.

The thickness of the porous layer comprising the containers partly filled with loose particles is generally not constant and it depends mainly on space restrictions in the vehicle. The thickness available may vary between 2mm and 100 mm, but in most cases the thickness varies between 5mm and 40 mm. Typical average thickness of the porous layer as part of a carpet or inner dash is normally between 10 and 30mm, e.g. in average about 20mm.

Preferably, the area weight of the porous layer embedding the containers is between 400gr/m$^2$ and 2000gr/m$^2$, preferably between 800gr/m$^2$ and 1600gr/m$^2$.

The automotive noise attenuating trim part according to the invention may comprise one or more additional layers, on the surface opposite the surface for contacting the vibrating panel of the vehicle. An additional layer can be at least one another porous layer, preferably a foam or felt chosen with the materials previously defined. In addition or alternatively the additional layer may be one of a film, a high density material layer, known in the industry as heavy layer material, a thermoplastic elastomeric material with a high filler content, a decorative layer like a nonwoven or carpet layer, or any combinations of such layers.

Alternatively a scrim layer might be placed on the surface of the porous layer in contact with the vibrating vehicle panel. The thickness of such a nonwoven or scrim layer should not introduce an elevation such that the contact surface of the container is no longer able to contact the vibrating surface of the vehicle.

In a preferred embodiment, the trim part according to the invention is a spring-mass system, formed by a low density soft decoupling layer and a high density closed heavy layer, whereby the containers partly filled with loose particles are comprised in the porous layer being the decoupler and whereby the decoupler is placed in contact with the vibrating body panel when the part is installed in the vehicle. Preferably, the mass layer or heavy layer has an area weight between 500g/m$^2$ and 6500g/m$^2$. Eventually the trim part may comprise further layers on top of the surface of the heavy layer like an stiffening layer and or a carpet layer for instance a nonwoven or tufted carpet. Such a part might be moulded to form for instance an inner dash trim part, outer dash trim part and or flooring part for a passenger compartment of a car or may be used in the front or rear trunk area.

Preferably the heavy layer comprises a thermoset plastic material selected from the group consisting of ethylene vinyl acetate (EVA) copolymer, polyester, polyethylene terephthalate, high density polyethylene, low density polyethylene, linear low density polyethylene, polypropylene, thermoplastic elastomer, thermoplastic rubber and polyvinyl chloride (PVC) or any combination of the foregoing. In addition it may comprise an inorganic filler material up to 85% in weight to increase the density of the material.

In this embodiment, the trim part according to the invention may comprise also additional layers such as a covering scrim layer, an acoustic scrim layer, a decorative top layer, for instance a tufted or nonwoven carpet layer on top of the mass layer.

In this case the trim part is able to attenuate noise at least based on insulation and damping, while by including an addition porous layer on top of the heavy layer would also include noise attenuation based on noise absorption.

Another preferred embodiment is a trim part comprising a fibrous porous layer comprising the containers according to the invention, and is further comprising at least one additional fibrous porous layer on top of the porous layer comprising the containers with an air flow resistance higher than that of the layer comprising the containers, preferably between 500Ns.m$^{-3}$ and 4000Ns.m$^{-3}$, to obtain an increased noise absorption in addition to the damping properties.

Another preferred embodiment is a trim part comprising an open cell foam layer comprising the containers according to the invention, and further comprising a second porous fibrous layer with an air flow resistance of between 500Ns.m$^{-3}$ and 4000Ns.m$^{-3}$ and an intermediate film or scrim layer between these two porous layers. In this embodiment, the open cell foam layer comprising the containers according to the invention is in contact with the vehicle body when the part is installed in the car, while the porous fibrous layer is facing the passenger compartment. The presence of the intermediate film or scrim helps enhancing the insulation properties in mid-high frequencies of the trim part, while the top porous layer guarantees good absorption properties, always in mid-high frequencies.

With all these examples a good damping and insulating and/or absorbing attenuation of noise may be achieved covering the frequency range between 100Hz and 10kHz.

The trim part according to the invention can be produced following methods known in the art.

By way of example, the production of the trim part according to the invention can take place following the steps hereafter described.

In a first step, the vessel is produced from for instance a thermoplastic polymeric material such as polypropylene, or any of the other materials previously defined using techniques well-known in the art, such as injection moulding, blow moulding, vacuum moulding or by additive manufacturing or 3D printing.

Preferably, the vessel is shaped for instance like a concave vessel delimited by an edge and preferably has, around this edge, a small flange with a width of at least 1mm.

The container walls should be at least closed such that the particles used are not able to leak through small gaps in the wall. In case a process for forming the vessel is producing porous walls, like for instance additive manufacturing, the container surface or surfaces may be treated for instance with a coating to obtain the closed structure necessary.

In a second step, the desired quantity of loose particles is deposited inside the vessel produced in the first step.

In a third step, the film is laminated onto the vessel containing the loose particles and bonded to its edge in such a way to delimit, together with the remaining part of the vessel walls, a closed volume comprising the particles.

The bonding process may be executed using techniques well-known in the art, e.g. through gluing or thermo-bonding. The presence of the small flange around the edge of the remaining part of the container walls produced in the first step may facilitate the bonding process. The bonding is however possible even without this flange. Optionally the rim and film might be folded together before or after bonding, to strengthen the bonding zone and to prevent leakage of the particles during use.

Alternatively a heat wrapping foil might be used that is able to cover the vessel and wrap around the walls of the container at least partly. After heat treatment the foil binds to the rim and wall of the vessel forming the closed container.

The vessel and containers may be produced in different steps and processes, which may be separated both geographically and timed.

In a separate process, a trim part is produced comprising a porous layer having a section of its outer surface partially facing the vehicle body when the part is installed on the vehicle and presenting, within this section of its outer surface, recesses with a shape that conforms to the shape of the containers filled with loose particles produced in the steps previously described.

The trim part may have the recesses already formed during the moulding of the trim part or they may be cut out in a seperate step before or after moulding.

In an alternative process the containers are placed in the mould and the trim part is produced directly including the containers, for instance using an in-moulding foaming process or an injected fibre process.

The trim part produced in this fourth step may have a three-dimensional complex shape, in order to adapt to the space available inside the passenger cabin.

This process may be carried out with standard production methods known in the art. For example, a barrier heavy layer may be initially shaped by vacuum-moulding and subsequently back-foamed, the back-foaming tool presenting protrusions that conform to the shape of the containers. After this, additional layers may be added on top of the heavy layer like, for example, a porous felt or foam layer, or a needle-punch or a tufted carpet.

Eventually, in an additional step the containers are embedded into the porous layer by inserting them into the recesses of the porous layer.

The insertion of the containers into the recesses is preferably carried out in an automated way, but it can be carried out also manually.

The presence of the flange around the edge of the vessel may facilitate the insertion process because it may help avoid that the container sinks into the porous layer. However, a proper and accurate integration of the container into the trim part is possible also without this flange.

Preferably, the container is bonded to the porous layer embedding it, at least on a part of its external surface. This helps avoid that it falls out of the trim part during the production process or during the installation of the trim part on the vehicle.

However, bonding of the container to the trim part is not necessary in order to avoid that it falls out of the trim part. This effect can be obtained also in other ways, for example by shaping the container in a suitable way (e.g. barrel-shaped container, or container shaped like an inverted truncated pyramid) or by providing the container with some mechanical fixation element (e.g. thin external protrusions having the form of spines or hooks). Or by a combination of at least partial bonding and a preferred shape.

Preferably the trim part according to the invention is an noise attenuating trim part for a battery lid or enclosure, an inner dash, an outer dash or a carpet system such as a tufted carpet, a needle punched carpet, a carpet with flocked surface, or a Dilour carpet and wherein the porous layer embedding the containers partly filled with loose particles is the one facing the vibrating vehicle body panel, when the part is installed on the vehicle.

Any range given throughout this description should include the starting and end points as well as normal expected deviations in the measurements. Start and end point values of different ranges may be combined.

Further embodiments of the invention may be derived from the description also by combining the different embodiments and examples of the invention and may be also derived from the description of the embodiments shown in the figures, the invention being defined by the appended claims. The figures are schematic and not necessarily in scale.

Brief description of drawings

Figure 1 shows a schematic cross section of a trim part according to the invention.
Figure 2 shows a schematic cross section of a trim part according to the invention before the containers are embedded into the porous layer.
Figure 3 shows a schematic cross section of a part according to the invention, when the part is installed on the vehicle on a predominantly horizontal panel.
Figure 4 shows a schematic cross section of a part according to the invention, when the part is installed on the vehicle on a predominantly vertical panel.
Figure 5 shows schematic cross sections of containers partly filled with loose particles, according to the invention.
Figure 6 shows an example of a 3d-moulded part according to the invention.
Figure 7 shows a schematic top view of a vehicle floor.
Figure 8 shows vehicle body vibration levels.

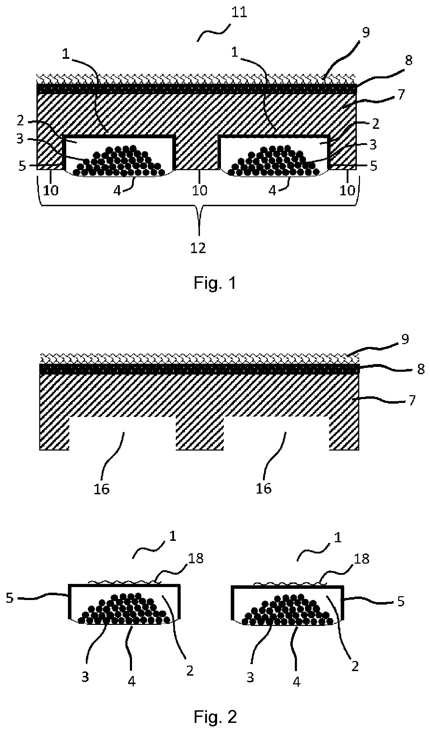

Figure 1 shows a schematic cross section of an example of a trim part (11) according to the invention. The part comprises a porous layer (7), a mass layer (8) and a carpet layer (9). The porous layer has a section of its outer surface (10) that is for contacting the vibrating vehicle surface, when the part is installed in the vehicle. The part further comprises closed containers (1) partially filled with loose particles (3). The internal volume of the containers that is not occupied by the loose particles (2) is filled by air. In this example, the walls of the container comprise a contact surface (4) consisting of a film and the remaining part of the walls of the container (5) is shaped like a vessel and it is much thicker and stiffer than the film. The contact surface (4) and the vessel (5) are connected along their edges in such a way that the contact surface (4) acts as a closure for the vessel (5) and together they form the closed container (1). The containers are integrated into the porous layer (7) in such a way that the closure (4) consisting of a film remains flush with the section (10) of the porous layer that is for contacting the vibrating vehicle surface, when the part is installed in the vehicle. The loose particles (3) are in contact with the closure (4) consisting of a film and, under the load due to the weight of the particles, the film (4), being thin and flexible, deforms and 'bulges' outwards. As a consequence of this deformation, when the part is laid on a vehicle vibrating surface, the contact surface (4) will adapt to the shape of the vibrating surface itself.

The deformation of the film will depend on the mechanical and physical properties of the film as well as on its dimensions. The lower the Young's modulus of the film and or its thickness, the higher will be the deformation. For example, for a film having a Young's modulus of 250MPa and a thickness of $27\mu$m and dimensions 50mm x 50mm, the deformation of the film will be such that the maximum 'outward bulging' of the film will be about 2mm. This would already compensate for most of the unevenness observed in vehicle body panels.

Figure 2 shows the same schematic cross section of a noise attenuating part according to the invention, before the containers (1) are embedded into the porous layer (7). The porous layer (7) presents recesses (16) having a shape that matches the shape of the containers (1). The containers (1) are embedded into the porous layer (7) by inserting them into the recesses (16). This operation is preferably carried out in an automated way by means of suitable mechanical tools known in the art, but it may be carried out also manually. Preferably, some glue (18) is distributed over at least a part of the surface of the containers (1) in such a way to favour their adhesion to the surface of the porous layer and avoid that they fall off during the handling operations necessary to install the part on the vehicle. However, gluing the containers to the porous layer is not strictly necessary to obtain this effect, which may be obtained also in other ways, e.g. by shaping the containers in a suitable way and/or by fixing the containers to the porous layer by means of some mechanical fixation element.

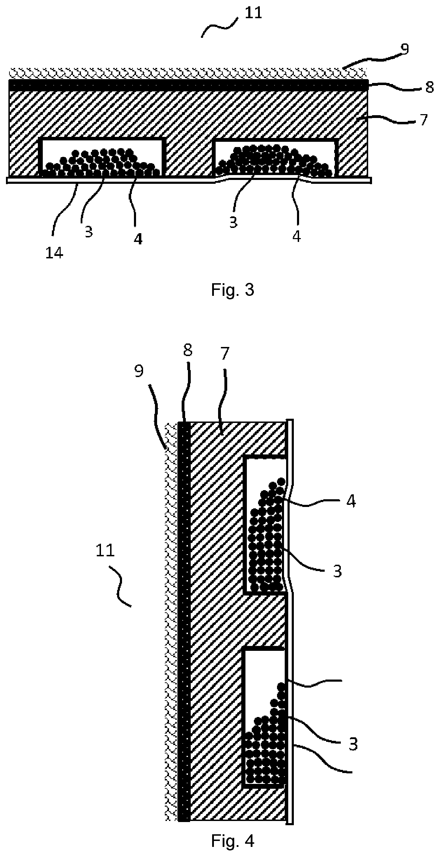

Figure 3 shows the same schematic cross section of a noise attenuating trim part (11) according to the invention, when it is installed on the vehicle body (14). When the part is installed on the vehicle body (14), the contact surface (4) consisting of a film adapts to the shape of the vehicle body (14) itself, guaranteeing close contact with it. Being the film very thin and flexible, this happens also in areas where the vehicle body (14) is not flat, as it is shown in Fig. 3 for the right-most container. The contact surface (4) consisting of a film is in close contact with the vehicle body (14) on one side and with the loose particles (3) on the other side and can then transmit the vehicle body vibrations to the loose particles in a very efficient way.

Figure 4 shows a schematic cross section of a noise attenuating trim part according to the invention similar to the one shown in Figure 3, but for application on a vertical body panel. As shown in Figure 4, in such an application, the loose particles (3) will tend to fill-up the lower part of the container volume, but they will still remain at least partially in contact with the contact surface (4) consisting of a film and, due to their granular nature, their overall weight will have a component normal to the film. In the region where the loose particles are in contact with the contact surface (4) consisting of a film, the film will adapt to the vehicle body (14), it will remain in close contact with it and it will then transmit the vehicle body vibrations to the loose particles (3).

In the examples shown in Figures 1 to 4, the section of the outer surface of the trim part that is the vehicle body when the part is installed on the car consists only of the portion belonging to the porous layer and of the portions belonging to the containers. However, in a trim part according to the invention the section of its outer surface that is for contacting the vehicle body when the part is installed on the car may comprise also other portions, neither belonging to the porous layer nor belonging to the containers.

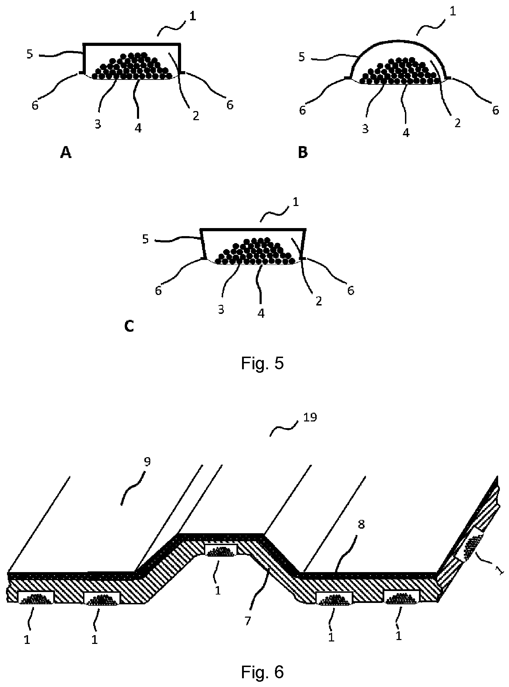

Figure 5a shows an embodiment of a container (1) according to the invention that is similar to the one shown in Figures 1 to 4, where the container is shaped like a parallelepiped and the vessel (5) presents, along its edge, a small flange (6).

The small flange (6) may help preventing that the container (1) sinks into the porous layer (7) during the integration process. However, a proper and accurate integration of the container into the trim part is possible also without this flange.

Figures 5b and 5c show other embodiments of the container (1) according to the invention that differ from the one shown in Figure 5a for the shape of the container. Figure 5b shows a schematic cross section of a hemispherical container, while figure 5c shows a schematic cross section of a container having the shape of an inverted truncated cone.

In particular, the embodiment shown in Figure 5c is an example of a 'self-clamping' shape, i.e. a shape such that, once the container is inserted into the porous layer (7), it cannot fall out simply by gravity. Other shapes having the same property (e.g. inverted truncated pyramid, barrel-like shape) are possible and will appear obvious to the man skilled in the art. All these shapes can advantageously simplify the embedding of the containers (1) into the porous layer (7). However, it is possible to avoid that the containers (1) fall out of the porous layer (7) also by other means, e.g. by gluing the containers (1) to the porous layer (7) at least on a part of their surface or by providing the container with some mechanical fixation element.

Figure 6 shows a schematic cross section of a 3d moulded noise attenuating trim part (19) according to the invention. In this figure, for simplicity all containers have the same parallelepiped shape and the same size. Depending on the needs and on production convenience, the containers may have any other kind of shape and they may have different size. The number and position of the containers is preferably corresponding to the areas where the vehicle body vibration is the highest, i.e. the so called "hot-spots", which can be identified with test or simulation methods well-known in the art. Preferably, the total surface of the walls of the containers that are in contact with the vehicle body (when the part is installed in the vehicle) is much smaller than that the total surface of the section of the trim part outer surface that is in contact with the vehicle body (when the part is installed in the vehicle). This assures that the embedding of the containers does not impact negatively the sound insulation and absorption performance of the trim part.

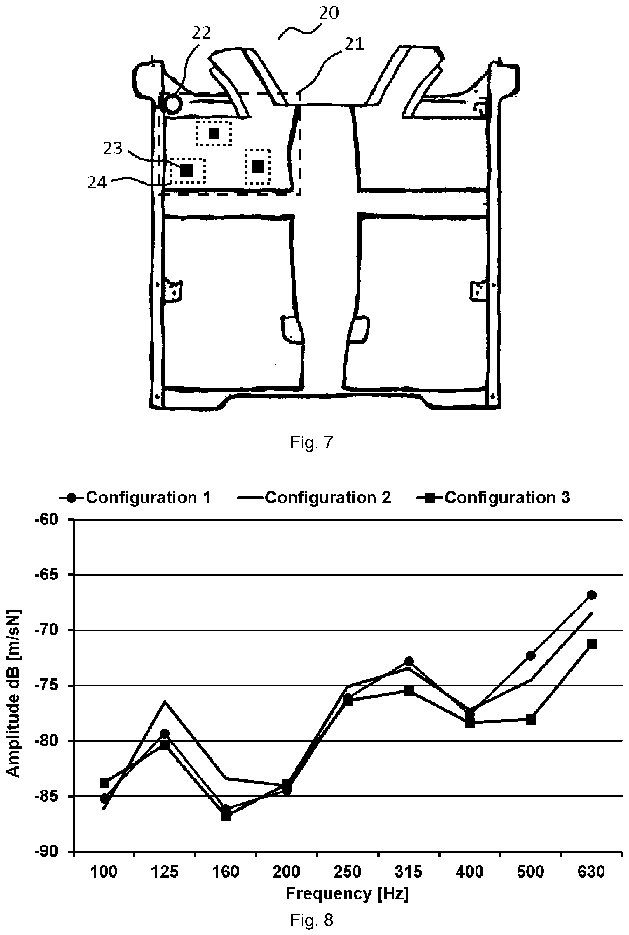

Figure 7 shows a schematic top view of a vehicle floor (20) cut-out from a body in white (BIW). The vehicle floor is made of 0.8 mm thick steel. Tests have been done on the front left area (21) of the floor, here also referred to as the test area (21) and indicated by a dashed rectangle in the figure, where different configurations of trim parts have been placed. The positions of the containers with loose particles (23) and of the damping pads (24) are shown in the same figure, but the configuration with traditional damping pads and the configuration with the part embedding containers partly filled with loose particles according to the invention were tested separately. During the tests the floor was excited using an electrodynamic shaker at an excitation point (22) situated in the front left corner of the vehicle floor. The signal used for the excitation was recorded in real driving conditions and covered a frequency bandwidth between 50 and 700 Hz.

Three configurations have been tested wherein configurations 1 and 2 are state of the art and configuration 3 is according to the invention. Configuration 1 is a trim part made of a porous fibrous layer facing and contacting the vehicle floor and a mass layer facing away from the floor. The porous fibrous layer has a thickness of 20mm, an area weight of 1700 gsm and is made of 20% Bico PET/CoPET and 80% shoddy cotton, wherein the shoddy cotton comprises 40% recycled fibres. The mass layer is an EPDM layer with 2mm thickness and an area weight of 2.8kg/m$^2$

Configuration 2 is the same trim part as in configuration 1 but with additional three damping pads (24) laminated on the vehicle floor and wherein the damping pads (24) are situated between the vehicle floor and the porous fibrous layer of the trim part. The damping pads (24) are bitumen based pads with a thickness of 2mm and area weight of 4kg/m$^2$, wherein each pad weighs 50grams. The area of one damping pad is 128 square centimetres and the three damping pads cover some of the test area (21) as shown in figure 6.

Configuration 3 is the same trim part as in configuration 1 but with 3 containers partly filled with loose particles according to the invention embedded in the porous fibrous layer as shown for example in figure 3. The containers are parallelepiped shaped boxes wherein the vessel, i.e. the side walls and the wall facing away from the vehicle floor are made of polypropylene with a thickness of 2.0mm, while the closure, i.e. and the wall facing and contacting the vehicle floor is a thin foil. The foil is 27μm thick PA/PE film, has an area weight of 38 gsm and a tensile modulus of 250MPa. The inner volume of each chamber is 20 cubic centimetres (5x5x0.8 cm) and it is partly filled with 42grams steel particles with a median particle size of 400mm and a particle size distribution span of about 2. These values are chosen in order to have a good performance predominantly over the frequency range above 250Hz. The total weight of one container with steel particles is 50 grams. When the trim part with the integrated containers according to configuration 3 is placed on the test area (21) the part is simply laid on (not glued, not even locally where the containers are positioned) and contacting the vehicle floor. The porous fibrous layer is 20mm thick and the total height of a container is about 11mm which means that in the areas where the containers with loose particles are positioned there is about 9mm of porous fibrous material between the containers and the mass layer.

Figure 8 shows measured average vibration velocity levels per unit excitation force in dB [(m/s)/N] for the different configurations. The floor vibration velocity levels were measured for each configuration on the steel side by eight accelerometers attached on the underside of the test area (16) and evenly distributed over its surface.

Higher vibration level amplitudes mean higher noise inside the vehicle and therefore lower vibration levels are desired.

Figure 8 shows average vibration levels measured on the vehicle floor in third-octaves between 100Hz and 630Hz. The vibration level at each frequency is an average of the eight measurement points where the accelerometers were mounted on the steel floor (body). Configuration 1 without any damping shows the highest levels except below 200 Hz where configuration 2 shows the highest levels due to the stiffening of the floor caused by the damping pads. Configuration 3 with containers partly filled with loose particles shows the lowest levels at the same weight as configuration 2, in particular above 250Hz.

The principles of the configurations may of course be applied on the complete floor and not just the test area (21).

**Claims**

1. Automotive noise attenuating trim part comprising at least a porous layer (7) and a plurality of closed containers (1), whereby each closed container (1) is partly filled with loose particles (3) that can freely move inside the volume of the container (1), whereby each closed container (1) comprises a contact surface (4) formed by a film configured to contact a vibrating surface of the vehicle and whereby the surface of the film opposite the contact surface is in contact with at least part of the loose particles (3), such that the film is configured to transfer vibrational energy from the vibrating surface to the loose particles (3) inside the container (1), **characterized in that** the porous layer (7) has a section of its outer surface configured to contact said vehicle vibrating surface and presenting a plurality of recesses (16) with a shape that conforms to the shape of the plurality of closed containers (1) and wherein each closed container (1) is integrated in one of the plurality of recesses (16) in such a way that the contact surface (4) of the film is flush with said section of the outer surface of the porous layer (7).

2. Automotive noise attenuating trim part according to claim 1, whereby each container (1) comprises a vessel part (5) for maintaining a defined void volume, and a closure part, connected together to form a closed container (1).

3. Automotive noise attenuating trim part according to claim 2, whereby the closure part comprises the film configured to contact the vibrating surface and in contact with a least part of the loose particles, preferably the closure part consist of the film.

4. Automotive noise attenuating trim part according to at least one of the preceding claims whereby the total volume of the loose particles (3) in each container (1) is less than 90%, preferably between 30% and 85% of the total internal volume of the closed container (1), preferably between 40 and 70%.

5. Automotive noise attenuating trim part according to at least one of the preceding claims whereby the loose particles (3) have a median particle size between 20μm and 1250μm, preferably between 250μm and 1000μm, preferably between 350μm and 700μm.

6. Automotive noise attenuating trim part according to at least one of the preceding claims whereby the loose particles (3) are made of at least one of the materials selected from the group consisting of inert minerals, such as calcium carbonate or silicon dioxide, metals, such as steel, ceramic materials, elastomeric materials, such as styrene-butadiene rubber, nitrile rubber, rubber from ethylene propylene diene monomer (EPDM) and butyl rubber or natural rubber and polymeric materials such as polystyrene, or combinations of such materials.

7. Automotive noise attenuating trim part according to at least one of the preceding claims whereby the total weight of the particles (3) in one container (1) is less than 100 grams, preferably between 5 and 100 grams, preferably between 10 and 50 grams.

8. Automotive noise attenuating trim part according to at least one of the preceding claims, wherein the film has a thickness between 10μm and 1mm, preferably between 40μm and 700μm, preferably between 60μm and 300μm.

9. A noise attenuating trim part according to any of the claims 2 to 8 wherein the vessel (5) presents an edge with a protruding flange (6) having a width of at least 1mm.

10. Automotive noise attenuating trim part according to at least one of the preceding claims whereby the porous layer (7) comprises up to 30 containers, preferably between 4 and 30 containers, more preferably between 8 and 20 containers.

11. Automotive noise attenuating trim part according to at least one of the preceding claims, wherein the porous layer (7) is one of an open cell foam layer or a fibrous felt layer.

12. Automotive noise attenuating trim part according to claim 11 whereby the fibrous felt layer comprises fibers and/or filaments, and further comprises a thermoset or thermoplastic binder.

13. Automotive noise attenuating trim part according to at least one of the preceding claims further comprising one or more additional layers on the surface of the porous layer (7) opposite the surface configured to contact the vibrating surface of the vehicle.

14. Automotive noise attenuating trim part according to claim 13 whereby the at least one or more additional layers is at least one of a foam layer, or felt layer, a film layer, a foil layer, a thermoplastic elastomeric layer with a high filler content, a decorative layer, such as a nonwoven or carpet layer, or any combinations of such layers.

15. Method of producing the automotive noise attenuating trim part according to one of the preceding claims with at least the steps of

>(a) shaping a plurality of vessel parts (5), each with a defined internal volume preferably using at least thermal moulding, blow moulding, vacuum moulding, injection moulding or compression moulding or by additive manufacturing or 3D printing;
>(b) filling the defined internal volume of each vessel part (5) with loose particles (3) so that the loose particles can freely move inside the volume;
>(c) laminating a closure comprising the film forming the contact surface (4) to the rim of each vessel part (5) to obtain a plurality of closed containers (1) filled with loose particles;
>(d) producing a porous layer (7) with recesses (16) fitting the shape of the containers;
>(e) inserting the containers (1) in the recesses (16) of the porous layer so that the contact surface (4) is flush with the section of the outer surface of the porous layer.

16. Use of the noise attenuating trim part according to any of claims 1 to 14 as an inner dash, an outer dash, a battery lid silencer, a battery enclosure insulator and/or as a carpet system such as a tufted carpet, a needle-punch carpet, a carpet with flocked surface, or a Dilour carpet, trunk trim part or trim part for the engine bay area, wherein the porous layer is the layer in contact with a vibrating body panel when the part is installed in the vehicle.

**Patentansprüche**

1. Geräuschdämpfendes Verkleidungsteil für Kraftfahrzeuge, umfassend mindestens eine poröse Schicht (7) und eine Vielzahl von geschlossenen Behältern (1), wobei jeder geschlossene Behälter (1) teilweise mit losen Partikeln (3) gefüllt ist, die sich innerhalb des Volumens des Behälters (1) frei bewegen können, wobei jeder geschlossene Behälter (1) eine durch einen Film gebildete Kontaktfläche (4) aufweist, die so konfiguriert ist, dass sie mit einer vibrierenden Oberfläche des Fahrzeugs in Kontakt steht, und wobei die der Kontaktfläche gegenüberliegende Filmoberfläche mit mindestens einem Teil der losen Partikel (3) in Kontakt steht, sodass der Film konfiguriert ist, Vibrationsenergie von der vibrierenden Oberfläche auf die losen Partikel (3) innerhalb des Behälters (1) zu übertragen, **dadurch gekennzeichnet, dass** ein Bereich der Außenfläche der porösen Schicht (7) so konfiguriert ist, dass er mit der vibrierenden Oberfläche des Fahrzeugs in Kontakt steht und eine Vielzahl von Aussparungen (16) darstellt, deren Form der Form der Vielzahl der geschlossenen Behälter (1) entspricht, und wobei jeder geschlossene Behälter (1) so in eine der Vielzahl der Aussparungen (16) integriert ist, dass die Kontaktfläche (4) des Films bündig mit dem Bereich der Außenfläche der porösen Schicht (7) abschließt.

2. Geräuschdämpfendes Verkleidungsteil für Kraftfahrzeuge nach Anspruch 1, wobei jeder Behälter (1) ein Gefäßteil (5) zum Aufrechterhalten eines definierten Hohlraumvolumens und ein Verschlussteil umfasst, die miteinander verbunden sind, um einen geschlossenen Behälter (1) zu bilden.

3. Geräuschdämpfendes Verkleidungsteil für Kraftfahrzeuge nach Anspruch 2, wobei das Verschlussteil den Film umfasst, der so konfiguriert ist, dass er mit der vibrierenden Oberfläche in Kontakt steht und mit mindestens Teil der losen Partikel in Kontakt steht, wobei das Verschlussteil bevorzugt aus dem Film besteht.

4. Geräuschdämpfendes Verkleidungsteil für Kraftfahrzeuge nach mindestens einem der vorstehenden Ansprüche, wobei das Gesamtvolumen der losen Partikel (3) in jedem Behälter (1) weniger ist als 90 %, vorzugsweise zwischen 30 % und 85 % des gesamten Innenvolumens des geschlossenen Behälters (1), vorzugsweise zwischen 40 und 70 %.

5. Geräuschdämpfendes Verkleidungsteil für Kraftfahrzeuge nach mindestens einem der vorstehenden Ansprüche, wobei die losen Partikel (3) eine mittlere Partikelgröße zwischen 20 $\mu$m und 1250 $\mu$m, vorzugsweise zwischen 250 $\mu$m und 1000 $\mu$m, vorzugsweise zwischen 350 $\mu$m und 700 $\mu$m aufweisen.

6. Geräuschdämpfendes Verkleidungsteil für Kraftfahrzeuge nach mindestens einem der vorstehenden Ansprüche, wobei die losen Partikel (3) aus mindestens einem der Materialien hergestellt sind, die aus der Gruppe ausgewählt sind, die aus inerten Mineralien wie Calciumcarbonat oder Siliziumdioxid, Metallen wie Stahl, keramischen Materialien, Elastomermaterialien wie Styrol-Butadien-Kautschuk, Nitrilkautschuk, Kautschuk aus Ethylen-Propylen-Dien-Monomer (EPDM) und Butylkautschuk oder Naturkautschuk, und polymeren Materialien wie Polystyrol oder Kombinationen solcher Materialien besteht.

7. Geräuschdämpfendes Verkleidungsteil für Kraftfahrzeuge nach mindestens einem der vorstehenden Ansprüche, wobei das Gesamtgewicht der Partikel (3) in einem Behälter (1) weniger als 100 Gramm beträgt, vorzugsweise zwischen 5 und 100 Gramm, vorzugsweise zwischen 10 und 50 Gramm.

8. Geräuschdämpfendes Verkleidungsteil für Kraftfahrzeuge nach mindestens einem der vorstehenden Ansprüche, wobei der Film eine Dicke zwischen 10 μm und 1 mm, vorzugsweise zwischen 40 μm und 700 μm, vorzugsweise zwischen 60 μm und 300 μm aufweist.

9. Geräuschdämpfendes Verkleidungsteil nach einem der Ansprüche 2 bis 8, wobei das Gefäß (5) eine Kante mit einem hervorstehenden Flansch (6) mit einer Breite von mindestens 1 mm darstellt.

10. Geräuschdämpfendes Verkleidungsteil für Kraftfahrzeuge nach mindestens einem der vorstehenden Ansprüche, wobei die poröse Schicht (7) bis zu 30 Behältern, bevorzugt zwischen 4 und 30 Behältern, bevorzugter zwischen 8 und 20 Behältern umfasst.

11. Geräuschdämpfendes Verkleidungsteil für Kraftfahrzeuge nach mindestens einem der vorstehenden Ansprüche, wobei die poröse Schicht (7) eine Schicht aus offenzelligem Schaumstoff oder eine Schicht aus Faserfilz ist.

12. Geräuschdämpfendes Verkleidungsteil für Kraftfahrzeuge nach Anspruch 11, wobei die Faserfilzschicht Fasern und/oder Filamente umfasst und weiterhin ein duroplastisches oder thermoplastisches Bindemittel umfasst.

13. Geräuschdämpfendes Verkleidungsteil für Kraftfahrzeuge nach mindestens einem der vorstehenden Ansprüche, das weiter eine oder mehrere zusätzliche Schichten auf der Oberfläche der porösen Schicht (7) gegenüber der Oberfläche umfasst, die für den Kontakt mit der vibrierenden Oberfläche des Fahrzeugs konfiguriert ist.

14. Geräuschdämpfendes Verkleidungsteil für Kraftfahrzeuge nach Anspruch 13, wobei die mindestens eine oder die mehreren zusätzlichen Schichten mindestens eine einer Schaumschicht oder Filzschicht, einer Filmschicht, einer Folienschicht, einer thermoplastischen Elastomerschicht mit hohem Füllstoffgehalt, einer dekorativen Schicht, beispielsweise eine Vlies- oder Teppichschicht, oder beliebige Kombinationen solcher Schichten sind.

15. Verfahren zum Herstellen des geräuschdämpfenden Verkleidungsteils für Kraftfahrzeuge nach einem der vorstehenden Ansprüche mit mindestens den Schritten von

   (a) Formen einer Vielzahl von Gefäßteilen (5) mit jeweils einem definierten Innenvolumen, bevorzugt unter Verwendung von mindestens Thermoformen, Blasformen, Vakuumformen, Spritzgießen oder Formpressen oder durch additive Fertigung oder 3D-Druck;
   (b) Füllen des definierten Innenvolumens jedes Gefäßteils (5) mit losen Partikeln (3), so dass sich die losen Partikel innerhalb des Volumens frei bewegen können;
   (c) Auflaminieren eines Verschlusses, der den die Kontaktfläche (4) bildenden Film umfasst, auf den Rand jedes Gefäßteils (5), um eine Vielzahl von geschlossenen, mit losen Partikeln gefüllten Behältern (1) zu erhalten;
   (d) Herstellen einer porösen Schicht (7) mit Aussparungen (16), die der Form der Behälter angepasst sind;
   (e) Einsetzen der Behälter (1) in die Aussparungen (16) der porösen Schicht, so dass die Kontaktfläche (4) bündig mit dem Abschnitt der Außenfläche der porösen Schicht abschließt.

16. Verwendung des geräuschdämpfenden Verkleidungsteils nach einem der Ansprüche 1 bis 14 als innere Stirnwand, äußere Stirnwand, Batteriedeckel-Schalldämpfer, Batteriegehäuse-Isolator und/oder als Teppichsystem, beispielsweise ein Tufting-Teppich, ein Nadelvlies-Teppich, ein Teppich mit beflockter Oberfläche oder ein Dilour-Teppich, ein Kofferraumverkleidungsteil oder ein Verkleidungsteil für den Motorraumbereich, wobei die poröse Schicht die Schicht ist, die mit einem vibrierenden Karosserieteil in Kontakt kommt, wenn das Teil im Fahrzeug eingebaut ist.

**Revendications**

1. Pièce de garniture automobile d'atténuation de bruit comprenant au moins une couche poreuse (7) et une pluralité de réceptacles fermés (1), selon laquelle chaque réceptacle fermé (1) est partiellement rempli de particules libres (3) qui peuvent se déplacer librement à l'intérieur du volume du réceptacle (1), selon laquelle chaque réceptacle fermé (1) comprend une surface de contact (4) formée par un film configuré pour venir en contact avec une surface vibrante du véhicule et selon laquelle la surface du film opposée à la surface de contact est en contact avec au moins une partie des particules libres (3), de telle sorte que le film soit configuré pour transférer l'énergie vibratoire de la surface vibrante aux particules libres (3) à l'intérieur du réceptacle (1), **caractérisée en ce que** la couche poreuse (7) présente une section de sa surface externe configurée pour venir en contact avec ladite surface vibrante de véhicule et présentant une pluralité d'évidements (16) dont la forme est conforme à la forme de la pluralité de réceptacles fermés (1) et dans laquelle chaque réceptacle fermé (1) est intégré dans l'un de la pluralité d'évidements (16) de telle sorte que la surface de contact (4) du film affleure ladite section de la surface externe de la couche poreuse (7).

2. Pièce de garniture automobile d'atténuation de bruit selon la revendication 1, selon laquelle chaque réceptacle (1) comprend une partie cavité (5) pour maintenir un volume vide défini, et une partie de fermeture, reliées ensemble pour former un réceptacle fermé (1).

3. Pièce de garniture automobile d'atténuation de bruit selon la revendication 2, selon laquelle la partie de fermeture comprend le film configuré pour venir en contact avec la surface vibrante et en contact avec au moins une partie des particules libres, de préférence la partie de fermeture consistant en le film.

4. Pièce de garniture automobile d'atténuation de bruit selon au moins l'une des revendications précédentes, selon laquelle le volume total des particules libres (3) dans chaque réceptacle (1) est inférieur à 90 %, de préférence entre 30 % et 85 % du volume interne total du réceptacle fermé (1), de préférence entre 40 et 70 %.

5. Pièce de garniture automobile d'atténuation de bruit selon au moins l'une des revendications précédentes, selon laquelle les particules libres (3) présentent une taille de particule médiane comprise entre 20 $\mu$m et 1250 $\mu$m, de préférence entre 250 $\mu$m et 1000 $\mu$m, de préférence entre 350 $\mu$m et 700 $\mu$m.

6. Pièce de garniture automobile d'atténuation de bruit selon au moins l'une des revendications précédentes, selon laquelle les particules libres (3) sont composées d'au moins un des matériaux choisis dans le groupe consistant en des minéraux inertes, tels que le carbonate de calcium ou le dioxyde de silicium, des métaux, tels que l'acier, des matériaux céramiques, des matériaux élastomères, tels que le caoutchouc styrène-butadiène, le caoutchouc nitrile, le caoutchouc à base de monomère d'éthylène-propylène-diène (EPDM) et le caoutchouc butyle ou le caoutchouc naturel, et des matériaux polymères tels que le polystyrène, ou des combinaisons de tels matériaux.

7. Pièce de garniture automobile d'atténuation de bruit selon au moins l'une des revendications précédentes, selon laquelle le poids total des particules (3) dans un réceptacle (1) est inférieur à 100 grammes, de préférence compris entre 5 et 100 grammes, de préférence entre 10 et 50 grammes.

8. Pièce de garniture automobile d'atténuation de bruit selon au moins l'une des revendications précédentes, dans laquelle le film présente une épaisseur comprise entre 10 $\mu$m et 1 mm, de préférence entre 40 $\mu$m et 700 $\mu$m, de préférence entre 60 $\mu$m et 300 $\mu$m.

9. Pièce de garniture d'atténuation de bruit selon l'une quelconque des revendications 2 à 8, dans laquelle la cavité (5) présente un bord avec une bride saillante (6) présentant une largeur d'au moins 1mm.

10. Pièce de garniture automobile d'atténuation de bruit selon au moins l'une des revendications précédentes, selon laquelle la couche poreuse (7) comprend jusqu'à 30 réceptacles, de préférence entre 4 et 30 réceptacles, plus préférentiellement entre 8 et 20 réceptacles.

11. Pièce de garniture automobile d'atténuation de bruit selon au moins l'une des revendications précédentes, dans laquelle la couche poreuse (7) est une couche de mousse à cellules ouvertes ou une couche de feutre fibreux.

12. Pièce de garniture automobile d'atténuation de bruit selon la revendication 11, selon laquelle la couche de feutre fibreux comprend des fibres et/ou des filaments et comprend en outre un liant thermodurcissable ou thermoplastique.

13. Pièce de garniture automobile d'atténuation de bruit selon au moins l'une des revendications précédentes, comprenant en outre une ou plusieurs couches supplémentaires sur la surface de la couche poreuse (7) opposée à la surface configurée pour venir en contact avec la surface vibrante du véhicule.

14. Pièce de garniture automobile d'atténuation de bruit selon la revendication 13, selon laquelle les au moins une ou plusieurs couches supplémentaires sont au moins une d'une couche de mousse, ou d'une couche de feutre, d'une couche de film, d'une couche de feuille, d'une couche élastomère thermoplastique à haute teneur en charge, d'une couche décorative, telle qu'une couche non tissée ou de tapis, ou n'importe quelle combinaison de telles couches.

**15.** Procédé de production de la pièce de garniture automobile d'atténuation de bruit selon l'une des revendications précédentes, comprenant au moins les étapes de

(a) façonnage d'une pluralité de parties cavités (5), chacune présentant un volume interne défini, de préférence à l'aide d'au moins un moulage thermique, un moulage par soufflage, un moulage sous vide, un moulage par injection ou un moulage par compression ou par fabrication additive ou impression 3D ;
(b) remplissage du volume interne défini de chaque partie cavité (5) avec des particules libres (3) de telle sorte que les particules libres puissent se déplacer librement à l'intérieur du volume ;
(c) stratification d'une fermeture comprenant le film formant la surface de contact (4) sur le rebord de chaque partie cavité (5) pour obtenir une pluralité de réceptacles fermés (1) remplis de particules libres ;
(d) production d'une couche poreuse (7) avec des évidements (16) épousant la forme des réceptacles ;
(e) insertion des réceptacles (1) dans les évidements (16) de la couche poreuse de telle sorte que la surface de contact (4) affleure la section de la surface externe de la couche poreuse.

**16.** Utilisation de la pièce de garniture d'atténuation de bruit selon l'une quelconque des revendications 1 à 14 comme isolation de tablier intérieur, isolation de tablier extérieur, isolation de couvercle de batterie, isolant de boîtier de batterie et/ou comme système de tapis tel qu'un tapis touffeté, un tapis aiguilleté, un tapis à surface floquée ou un tapis Dilour, pièce de garniture de coffre ou pièce de garniture pour la zone du compartiment moteur, dans laquelle la couche poreuse est la couche en contact avec un panneau de carrosserie vibrant lorsque la pièce est installée dans le véhicule.

EP 3 926 620 B1

Fig. 1

Fig. 2

18

Fig. 3

Fig. 4

Fig. 5

Fig. 6

Fig. 7

Fig. 8

**EP 3 926 620 B1**

**Patent documents cited in the description**

- US 2005194210 A1
- US 9630576 B1
- WO 2019079695 A1